# EUROPÄISCHE PATENTSCHRIFT

(11) **EP 0 354 545 B1**
(45) Veröffentlichungstag und Bekanntmachung des Hinweises auf die Patenterteilung: **18.05.1994**
(21) Anmeldenummer: 89114705.0
(22) Anmeldetag: 09.08.1989
(51) Int. Cl.: H02B 1/20

(54) **Kreuzschienenstromverteiler**
Cross-bar distribution frame
Bâti de distribution pour barres croisées

(30) Priorität: 12.08.1988 DE 8810245 U
(43) Veröffentlichungstag der Anmeldung: 14.02.1990
(73) Patentinhaber: Asea Brown Boveri Aktiengesellschaft, 68309 Mannheim (DE); Karl Kässbohrer Fahrzeugwerke GmbH, D-89077 Ulm (DE)
(72) Erfinder: Wichmann, Ewald, D-5880 Lüdenscheid (DE); Meiser, Heinz, D-7914 Kadeltshofen (DE)
(74) Vertreter: Rupprecht, Klaus, Dipl.-Ing.

(56) Entgegenhaltungen:
- EP-A- 0 240 453
- DE-A- 1 490 464
- DE-U- 1 988 270

## Beschreibung

Die Erfindung betrifft einen Kreuzschienenstromverteiler, insbesondere für die Verwendung in Zentralelektriken von Kraftfahrzeugen nach dem Oberbegriff des Anspruchs 1.

Zentralelektriken stellen eine zentrale Schnittstelle der Borderlektronik von Kraftfahrzeugen dar. Herkömmlicherweise werden solche Zentralelektriken mit Steckanschlüssen für Relais, Sicherungen, elektrische Verbraucher und Kabelbäume versehen. Als Hauptursache für die relativ hohe Rate von Funktionsstörungen eines Automobilbordnetzes hat sich der manuelle Einfluß und damit die menschliche Unzulänglichkeit erwiesen, über längere Zeit komplexe Bauteile absolut fehlerfrei fertigen zu können. Beispielsweise besitzt das Bordnetz eines Fahrzeuges der Mittelklasse cirka 450 Kontaktpaare, Steckgehäuseleitungen, -tüllen und -dichtungen, so daß sich insgesamt cirka 1000 Bauteile ergeben. Billigt man jedem Bauteil eine Ausfallrate von 10⁻⁵ zu, d. h. ein Teil aus einer Menge von 100.000 darf ausfallen, dann ergibt sich bei 1000 Teilen eine Gesamtausfallrate von 1 %. Dieser Wert wird heute ungefähr erreicht. Ein hoher Anteil der Funktionsausfälle ist somit auf die Verbindungstechnik zurückzuführen. Mit Zentralelektriken läßt sich erreichen, daß das Bordnetz in viele, weniger komplexe Leitungsstränge aufgeteilt, d.h. modularisiert werden kann. Der Trend nach wachsender Modularisierung wird umso verständlicher, je individueller Kraftfahrzeuge aufgrund unterschiedlicher Kundenwünsche werden, trotz Zugehörigkeit zur gleichen Typ- oder Modellreihe. Aus Sicherheitsgründen müssen Zentralelektriken außerdem robust ausgebildet sein, weil sie vielfältigen Belastungen (Temperatur, Feuchtigkeit, Erschütterung, u.a.) ausgesetzt sind.

Aus der DE-AS 1 965 236 ist ein Kreuzschienenstromverteiler bekannt mit kreuzweise geführten, in zwei parallelen Ebenen zwischen zwei gleichgeformten Isolierkörpern angeordneten gleichartigen Leiterschienen, die an ihren Kreuzungsstellen durch federelastische Stecker elektrisch miteinander verbunden werden können. Dieser bekannte Kreuzschienenstromverteiler ist jedoch für den Einsatz in Zentralelektriken nur bedingt geeignet. So haben beispielsweise die verwendeten Stromschienen einen kreisförmigen Querschnitt, wodurch nur eine punktförmige Kontaktgabe zu Aufsteckkontaktierelementen erreicht werden kann. Ferner sind an den Kreuzschienen keine Anschlüsse für den zentralen Anschluß und die zentrale Verdrahtung elektrischer Komponenten vorgesehen. Auch ist der als Aufsteckkontaktierelement verwendete haarnadelförmige Federbügel nicht so ausgebildet, daß er den hohen, an die Betriebssicherheit eines Bordnetzes zu stellenden Anforderungen hinsichtlich Kontaktgabe und Rüttelfestigkeit genügen könnte, da er die Stromschienen jeweils nur an zwei Punkten kontaktiert.

Es ist Aufgabe vorliegender Erfindung, den bekannten Kreuzschienenstromverteiler unter Vermeidung oben genannter Nachteile für die Verwendung in Zentralelektriken von Kraftfahrzeugen so weiterzubilden, daß die Zentralelektrik in Flachbauweise erstellt werden kann, daß wahlweise und abhängig von vorgegebenen, im Einzelfall zu realisierenden Strompfaden eine Codierung des Stromverlaufs innerhalb der aus den Kreuzungsstellen des Kreuzschienenstromverteilers gebildeten Matrix vorgenommen werden kann und daß unter Anpassung an geänderte Stromlauf- und Anschlußpläne die Stromführung auch mit einfachen Mitteln geändert werden kann.

Diese Aufgabe wird erfindungsgemäß das Kennzeichen des Anspruchs 1 gelöst.

Erfindungsgemäß wird erreicht, daß eine Vielzahl elektrischer Komponenten an zentralen Schnittstellen weitgehend störunanfällig miteinander verbunden werden können, was eine weiter Modularisierung und damit eine erhebliche Verringerung der Anzahl von Kabelbäumen bewirkt. Aufgrund der erfindungsgemäßen Ausbildung des Aufsteckkontaktierelementes ist eine gute Kontaktgabe und weitgehende Rüttelfestigkeit zwischen Aufsteckkontaktierelement und den zu kontaktierenden Stromschienen erreicht. Besonders vorteilhaft ist die geringe Einbautiefe des Kreuzschienenstromverteilers, aufgrund der seitlichen Anordnung der elektrischen Anschlüsse. Es können so beispielsweise mehrere Zentralelektriken auch übereinander gestapelt werden, was bei bekannten Zentralelektriken, bei denen die Relais und Sicherungen auf der Oberseite sowie die Bordnetzanschlüsse sowie Verbraucher- und Kontrollgeräte auf der Unterseite angeschlossen sind, nicht möglich ist.

Aufgrund der problemlosen Abänderbarkeit des Stromlaufs der erfindungsgemäßen Zentralelektrik und der damit verbundenen einfachen Umrüstbarkeit lassen sich gerade bei Kraftfahrzeugen mit geringen Produktionszahlen (z.B. Autobusse, Lastkraftwagen) erhebliche Einrichtungskosten gegenüber herkömmlichen Zentralelektriken einsparen.

Vorteilhafte Weiterbildungen des Erfindungsgegenstandes sind in den Unteransprüchen näher gekennzeichnet.

Anhand eines in der Zeichnung dargestellten Ausführungsbeispiels soll die Erfindung näher erläutert und beschrieben werden.

Es zeigen:
- Figur 1:: eine perspektivische Gesamtansicht einer Zentralelektrik mit erfindungsgemäßem Kreuzschienenstromverteiler,
- Figur 2:: den erfindungsgemäßen Kreuzschienenstromverteiler nebst Aufsteckkontaktierelementen,
- Figur 3:: eine Sicherungsanschluß-Kontakfederkonfiguration des erfindungsgemäßen Kreuzschienenstromverteilers.
- Figur 4:: eine Relaisanschluß-Kontaktfederkonfiguration des erfindungsgemäßen Kreuzschienenstromverteilers,
- Figur 5:: ein Aufsteckkontaktierelement gemäß einem ersten Ausführungsbeispiel,
- Figur 6:: ein Aufsteckkontaktierelement gemäß einem zweiten Ausführungsbeispiel.

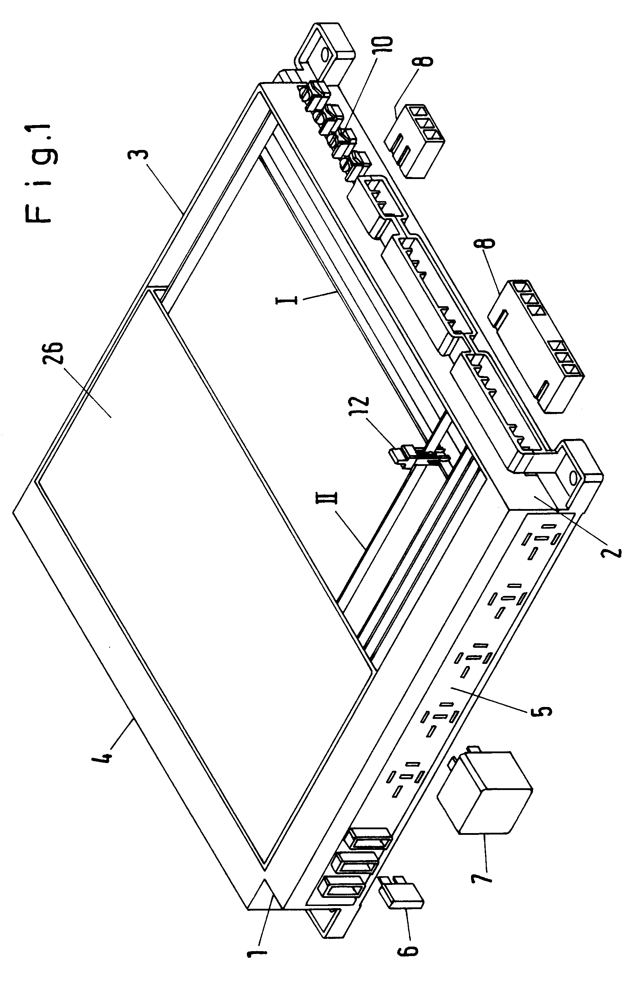

Wie Figur 1 zeigt ist der Kreuzschienenstromverteiler in einem im wesentlichen quaderförmigen Gehäuse 1 untergebracht, wodurch eine Zentralelektrik ausgebildet ist. Das Gehäuse 1 ist mittels einer Gehäuseabdeckung 26 abgedeckt. An den Seitenteilen 2,3,4,5 des Gehäuses 1 sind Anschlußmöglichkeiten für Sicherungen 6, Relais 7 sowie Buchsengehäuse 8 und Anschlußdrähte (nicht abgebildet) vorgesehen. Innerhalb des Gehäuses 1 liegen Stromschienen I in Höhe einer ersten Ebene im Stromschienenabstand z parallel nebeneinander. In Höhe einer darüberliegenden zweiten Ebene sind Stromschienen II ebenfalls parallel im Stromschienenabstand z angeordnet. Die Stromschienen I,II haben vorzugsweise einen rechteckigen Querschnitt. Die übereinander angeordneten Gitter aus Stromschienen I,II haben den Gitterabstand Z.

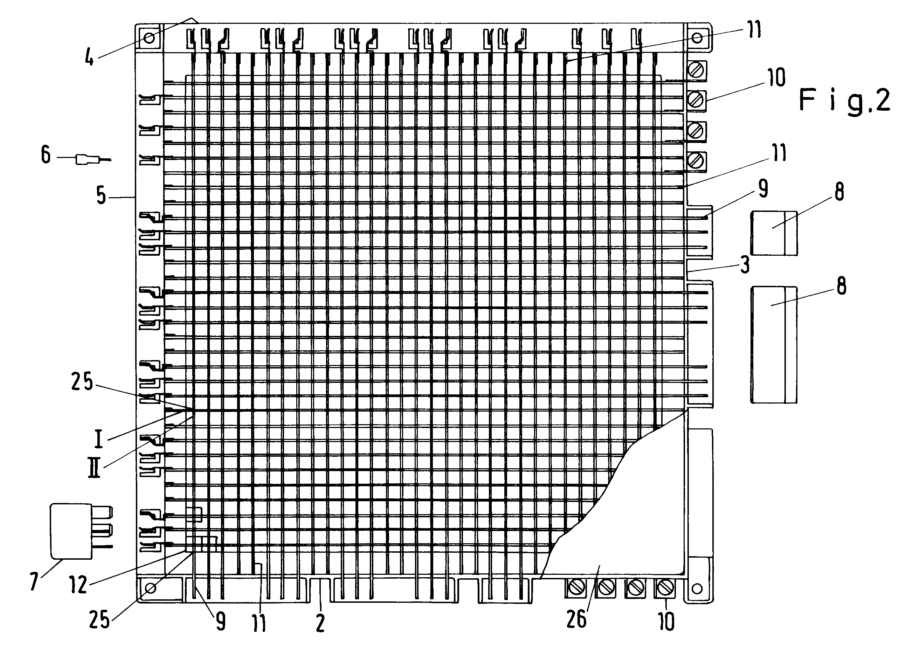

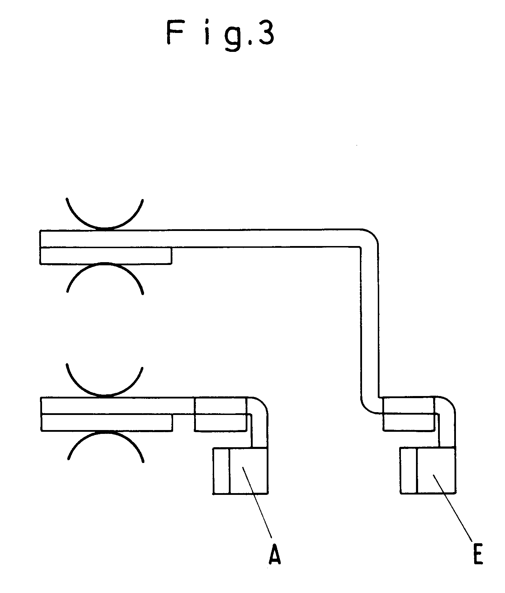

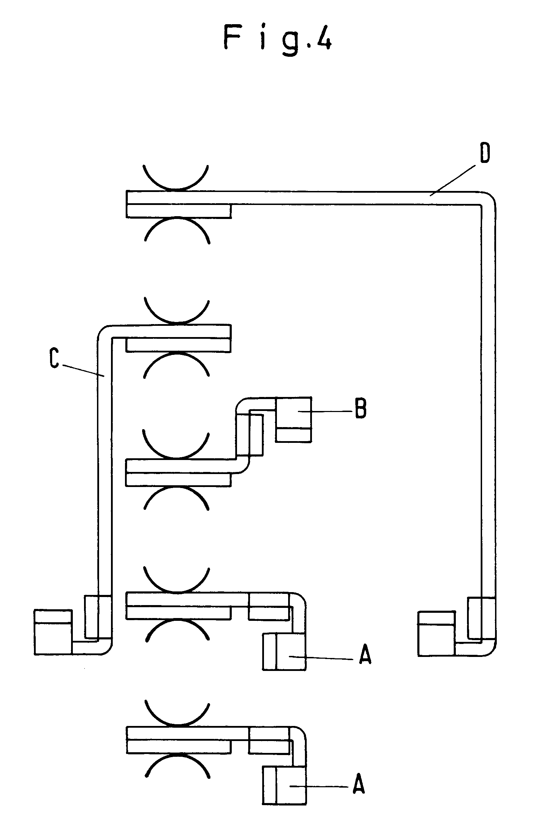

Wie Figur 2 zeigt, sind sowohl die ersten Stromschienen I als auch die zweiten Stromschienen II an einer ersten Anschlußseite mit Flachsteckern 9 ausgerüstet, welche Flachsteckanschlüsse für elektrische Verbraucher bilden und für den Anschluß von aufsteckbaren Buchsengehäusen 8 vorgesehen sind. In Figur 2 sind zwei sechspolige Flachsteckanschlüsse und ein dreipoliger Flachsteckanschluß gezeigt. Die erste Anschlußseite von jeweils vier Stromschienen I,II ist außerdem mit vier Klemmschrauben 10 versehen, welche als Bordnetzanschlüsse für elektrische Leitungen dienen. Zudem sind elf, nicht über die Seitenwandteile 2, 3 hindurchgeführte Leitungsanschlüsse 11 vorgesehen. Eine zweite Anschlußseite gleich ausgerichteter Stromschienen I,II weist jeweils fünf Relaisanschluß-Kontaktfederkonfigurationen A,B,C,D sowie jeweils drei Sicherungsanschluß-Kontaktfederkonfigurationen A,E auf, die für den Anschluß von Relais 7 bzw. Sicherungen 6 vorgesehen sind. Hierzu sind die Stromschienen I,II mit Kontaktfedern A,E bzw. mit Kontaktfedern A,B,C,D versehen, wie die Figuren 3,4 im einzelnen zeigen. Insgesamt ergibt sich somit ein Kreuzschienensystem mit jeweils zweiunddreißig ersten und zweiten Stromschienen I,II, wodurch sich 32x32=1024 Kreuzungsstellen 25 ergeben. Die hierdurch ausgebildete, vorzugsweise quadratische Matrix aus Kreuzungsstellen 25 läßt sich durch einfaches Aufstecken von Aufsteckkontaktierelementen 12 auf einen vorgegebenen Stromlauf- und Anschlußplan codieren. Bei diesem System läßt sich hinsichtlich durchzuführender Umrüstungen jede Kreuzungsstelle 25 mit einer beliebigen anderen Kreuzungsstelle 25 in einfacher Weise brücken.

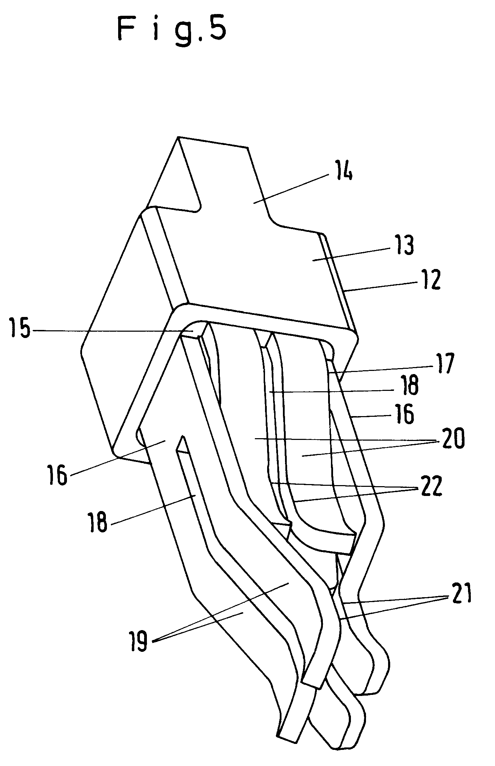

Jedes Aufsteckkontaktierelement 12, mittels dessen die Stromschienen I, II miteinander leitend verbunden werden können, weist einen quaderförmigen Grundkörper 13 auf. Die Seiten der quadratischen Grundfläche haben die Länge z. Der leichteren Handhabbarkeit wegen ist auf dem Grundkörper 13 ein Griffelement 14 aufgebaut. In einer stromschienenseitig ausgeformten Ausnehmung 15 des Grundkörpers 13 ist innenwandseitig ein Paar sich gegenüberstehender erster Klemmzungen 16 sowie um 90 ° versetzt ein Paar zweiter sich gegenüber stehender Klemmzungen 17 angeformt. Jede Klemmzunge 16, 17 weist wiederum zwei paarig nebeneinander angeordnete, jeweils form- und materialidentische, sowie durch einen Schlitz 18 voneinander getrennte federnde erste Klemmlaschen 19 bzw. federnde zweite Klemmlaschen 20 auf. Die zweiten Klemmlaschen 20 sind gegenüber den ersten Klemmlaschen 19 um den Gitterabstand Z verkürzt. Wie das in Figur 5 gezeigte erste Ausführungsbeispiel eines Aufsteckkontaktierelementes 12 zeigt. sind die Endteile der Klemmlaschen 19, 20 vorzugsweise als Klemmbügel 21, 22 ausgebildet, wodurch sich ein hoher Kontaktdruck und eine ausreichende Kontaktfläche in Bezug auf die zu kontaktierenden Stromschienen I,II ergibt. Da jede Stromschiene I,II somit vierfach kontaktiert wird, läßt sich der Übergangswiderstand herabsetzen und eine höhere Kontaktsicherheit erreichen.

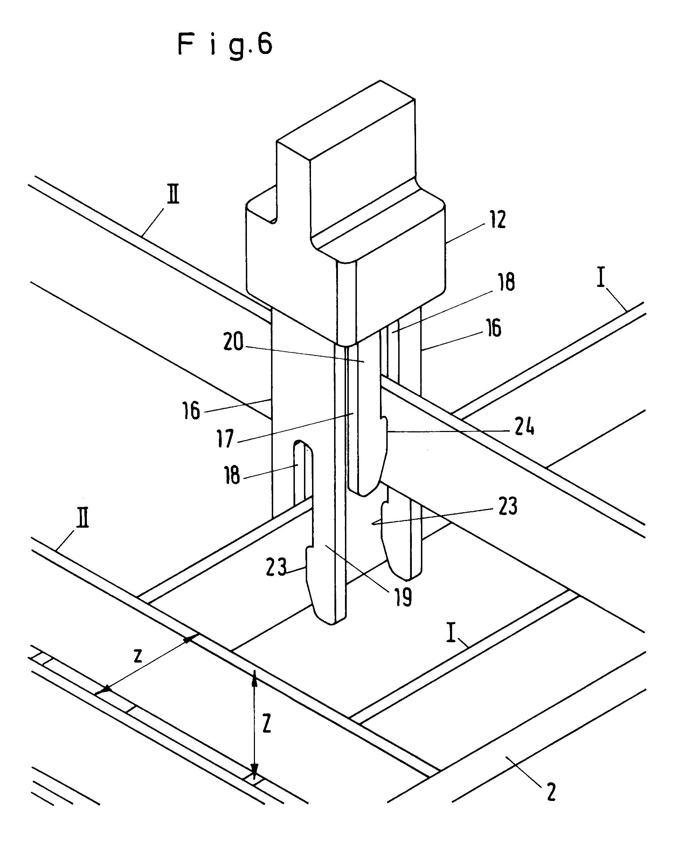

Wie Figur 6 zeigt können die Klemmlaschen 19, 20 jedoch auch als federnde Klemmnocken 23, 24 ausgebildet sein.

### Bezugszeichenliste

- 1: Gehäuse
- 2,3,4,5: Seitenwände von 1
- 6: Sicherungen
- 7: Relais
- 8: Buchsengehäuse
- 9: Flachstecker
- 10: Klemmschrauben
- 11: Leitungsanschlüsse
- 12: Aufsteckkontaktierelement
- 13: Grundkörper
- 14: Griffelement
- 15: Ausnehmung
- 16: erste Klemmzungen
- 17: zweite Klemmzungen
- 18: Schlitz
- 19: erste Klemmlaschen
- 20: zweite Klemmlaschen
- 21: erste Klemmbügel
- 22: zweite Klemmbügel
- 23: erste Klemmnocken
- 24: zweite Klemmnocken
- 25: Kreuzungsstellen
- 26: Gehäuseabdeckung
- I: zweite Stromschienen
- II: zweite Stromschienen
- A,B,C,D,E: Kontaktfedern

## Patentansprüche

1. Kreuzschienenstromverteiler, insbesondere für die Verwendung in Zentralelektriken von Kraftfahrzeugen, mit einem im wesentlichen quaderförmigen Gehäuse, mit zwei parallelen, zueinander beabstandeten und kreuzweise zueinanderliegenden Gittern aus jeweils parallel verlauffenden Stromschienen (I,II), wobei die gekreuzt übereinanderliegenden (I,II) Stromschienen der beiden Gitter an vorgegebenen Kreuzungsstellen (25) mittels federelastischer Aufsteckkontaktierelemente (12) elektrisch miteinander verbindbar sind, dadurch gekennzeichnet, daß eine erste Anschlußseite von jeweils gleich ausgerichteten Stromschienen (I,II) mit Flaschsteckern (9), mit Klemmschrauben (10) sowie mit mindestens einem Leitungsanschluß (11) versehen ist, daß an einer zweiten Anschlußseite der jeweils gleich ausgerichteten Stromschienen (I,II) unter jeweiliger Ausbildung mindestens einer Relaisanschluß-Kontaktfederkonfiguration (A,B,C,D) und mindestens einer Sicherungsanschluß-Kontaktfederkonfiguration (A,E) Kontaktfedern (A,B,C,D,E) sowie mindestens ein Leitungsanschluß (11) angebracht sind, wobei sämtliche Anschlüsse (9,10; A,B,C,D,E; A,E) an Seitenwänden (2,3,4,5) des Gehäuses (1) angeordnet sind, und daß das einzelne Aufsteckkontaktierelement (12) einen quaderförmigen Grundkörper (13) aufweist mit quadratischer Grundfläche und einer Seitenlänge, die dem Stromschienen-Abstand (z) entspricht, wobei in einer kreuzschienenseitig ausgeformten Ausnehmung (15) des Grundkörpers (13) innenwandseitig jeweils ein Paar sich gegenüberstehender erster Klemmzungen (16) bzw. zweiter Klemmzungen (17) angeformt sind, wobei jede Klemmzunge (16,17) zwei paarig nebeneinander angeordnete, jeweils form- und materialidentische sowie durch einen Schlitz (18) voneinander getrennte federnde erste Klemmlaschen (19) bzw. zweite Klemmlaschen (20) aufweist und wobei die zweiten Klemmlaschen (20) um den Gitterabstand (Z) kürzer sind als die ersten Klemmlaschen (19).

2. Kreuzschienenstromverteiler nach Anspruch 1, dadurch gekennzeichnet, daß die aus Kreuzungsstellen (25) des Kreuzschienenstromverteilers gebildete Codier-Matrix quadratisch ist.

3. Kreuzschienenstromverteiler nach Anspruch 1 oder 2, dadurch gekennzeichnet, daß mittig auf dem Grundkörper (13) des Aufsteckkontaktierelements (12) ein Griffelement (14) aufgebaut ist.

4. Kreuzschienenstromverteiler nach einem der vorhergehenden Ansprüche, dadurch gekennzeichnet, daß die Klemmlaschen (19,20) als Klemmbügel (21,22) oder Klemmnocken (23,24) ausgebildet sind.

5. Kreuzschienenstromverteiler nach einem der vorhergehenden Ansprüche, dadurch gekennzeichnet, daß die Stromschienen (I,II) jeweils eine rechteckige Querschnittsfläche aufweisen.

6. Kreuzschienenstromverteiler nach einem der vorhergehenden Ansprüche, dadurch gekennzeichnet, daß sämtliche Stromschienen (I,II) identisch geformt sind und daß die ersten Stromschienen (I) um 90° gegenüber den zweiten Stromschienen (ii) verschwenkt sind.

## Claims

1. Crossbar distributor, especially for use in central electrical units of motor vehicles, having an essentially parallelepiped housing, having two grids which are parallel, spaced apart, located in a cruciform manner with respect to one another, and each consist of parallel running busbars (I, II), it being possible to connect the busbars, which lie (I, II) [sic] one on top of the other in a cruciform manner, of the two grids to one another electrically at predetermined crossing points (25) by means of resiliently elastic plug-on contact-making elements (12), characterized in that a first connection side of busbars (I, II) which are in each case aligned identically is provided with flat plugs (9), with terminal screws (10) and with at least one cable connection (11), in that contact springs (A, B, C, D, E) and at least one cable connection (11) are fitted on a second connection side of the busbars (I, II) which are in each case aligned identically, in each case forming at least one relay connection contact spring configuration (A, B, C, D), at least one fuse connection contact spring configuration (A, E), all the connections (9, 10; A, B, C, D, E; A, E) being arranged on side walls (2, 3, 4, 5) of the housing (1), and in that the individual plug-on contact-making element (12) has a parallelepiped base body (13) with a square base area and a side length which corresponds to the busbar spacing (z), in each case one pair of mutually opposite first clamping tongues (16) or second clamping tongues (17) respectively being integrally formed in a recess (15), which is formed out on the crossbar side, of the base body (13), on the inner wall side, each clamping tongue (16, 17) having two sprung first clamping lugs (19) or second clamping lugs (20) respectively which are arranged side by side in pairs, are identical to one another in terms of shape and material, and are separated from one another by a slot (18), the second clamping lugs (20) being shorter than the first clamping lugs (19) by the grid spacing (Z).

2. Crossbar distributor according to Claim 1, characterized in that the coding matrix formed from crossing points (25) of the crossbar distributor is square.

3. Crossbar distributor according to Claim 1 or 2, characterized in that a grip element (14) is mounted centrally on the base body (13) of the plug-on contact-making element (12).

4. Crossbar distributor according to one of the preceding claims, characterized in that the clamping lugs (19, 20) are constructed as clamping clips (21, 22) or clamping studs (23, 24).

5. Crossbar distributor according to one of the preceding claims, characterized in that the busbars (I, II) each have a rectangular cross-sectional area.

6. Crossbar distributor according to one of the preceding claims, characterized in that all the busbars (I, II) are of identical shape, and in that the first busbars (I) are pivoted through 90° with respect to the second busbars (II).

## Revendications

1. Distributeur de courant à barres croisées, en particulier pour utilisation dans des systèmes centraux d'interconnexion électrique de véhicules automobiles, comprenant un boîtier essentiellement parallélépipèdique, deux grilles parallèles, espacées et croisées de barres de courant (I, II) respectivement parallèles, les barres de courant (I, II) superposées de façon croisée des deux grilles pouvant être reliées électriquement entre elles à des emplacements de croisement (25) prédéterminés, à l'aide d'éléments de contact à enfichage (12) élastiques, caractérisé par le fait gu'un premier côté de connexion de barres de courant (I, II) orienté dans le même sens est muni de fiches plates (9), de cosses à vis (10) ainsi que d'au moins une connexion de conducteurs (II) , que sur un deuxième côté de connexion des barres de courant (I, II) respectivement orientées dans le même sens, sont disposés des ressorts de contact (A, B, C, D, E) avec formation d'au moins une configuration de ressort de contact de connexion de relais (A, B, C, D) et d'au moins une configuration de ressort de contact de connexion de fusible (A, E), ainsi qu'au moins une connexion de conducteur (11), toutes les connexions (9, 10; A, B, C, D, E; A, E) étant disposées sur des parois latérales (2, 3, 4, 5) du boîtier (1), et que chaque élément de contact à enfichage (12) présente un corps de base (13) parallélépipèdique, avec une surface de base carrée et une longueur de côté qui correspond à la distance (z) entre les barres de courant, une paire de premières languettes de serrage (16) et de secondes languettes de serrage (17) opposées étant formées sur le côté de paroi intérieure, dans un évidement (15) formé dans le corps de base (13) côté barres croisées, chaque languette de serrage (16, 17) présentant deux premiers doigts de serrage (19) et deux seconds doigts de serrage (20) élastiques disposés par paires côte-à-côte, réalisés avec la même forme et à partir du même matériau, et séparés l'un de l'autre par une fente (18) et les seconds doigts de serrage (20) étant plus courts que les premiers doigts de serrage (19) d'une valeur correspondant à la distance (Z) des grilles.

2. Un distributeur de courant à barres croisées suivant la revendication 1, caractérisé par le fait que la matrice de codage formée par les emplacements de croisement (25) du distributeur de courant à barres croisées est carrée.

3. Un distributeur de courant à barres croisées suivant la revendication 1 ou 2, caractérisé par le fait qu'un élément de préhension (14) est formé en position centrale sur le corps de base (13) de l'élément de contact à enfichage (12).

4. Un distributeur de courant à barres croisées suivant l'une des revendications précédentes, caractérisé par le fait que les languettes de serrage (19, 20) sont réalisées sous forme de doigts de serrage argués (21, 22) ou de cames de serrage (23, 24).

5. Un distributeur de courant à barres croisées suivant l'une des revendications précédentes, caractérisé par le fait que les barres de courant (I, II) présentent chacune un profil rectangulaire.

6. Un distributeur de courant à barres croisées suivant l'une des revendications précédentes, caractérisé par le fait que toutes les barres de courant (I, II) sont de forme identique et que les premières barres de courant (I) sont décalées angulairement de 90° par rapport aux secondes barres de courant (II).
